# EUROPÄISCHE PATENTANMELDUNG

(11) **EP 0 798 337 A2**
(43) Veröffentlichungstag der Anmeldung: **01.10.1997**
(21) Anmeldenummer: 97250071.4
(22) Anmeldetag: 13.03.1997
(51) Int. Cl.: C08K 5/098, C08L 7/02

(54) **Konservierter und stabilisierter Naturlatex, Verfahren zu seiner Herstellung und Verwendung wasserlöslicher Carbonsäuresalze zu seiner Konservierung und Stabilisierung**

(30) Priorität: 25.03.1996 DE 19613011
(71) Anmelder: Schill & Seilacher GmbH & Co., D-22113 Hamburg (DE)
(72) Erfinder: Umland, Henning, Dr., 21423 Winsen/Luhe (DE); Petri, Clara, 21423 Winsen/Luhe (DE)
(74) Vertreter: UEXKÜLL & STOLBERG

(57) **Zusammenfassung**

Die Erfindung beschreibt einen Naturlatex, der durch mindestens ein wasserlösliches Carbonsäuresalz der Formel R-COO⁻M⁺, in der R ein Alkyl- oder Alkenylrest mit verzweigter Kohlenstoffkette ist und M⁺ ein einwertiges Kation ist, konserviert und stabilisiert worden ist. Ferner umfaßt sie Verfahren zu seiner Herstellung und die Verwendung eines wasserlösliches Carbonsäuresalz zur Konservierung und/oder Stabilisierung von Naturlatex.

## Beschreibung

Die Erfindung betrifft einen konservierten und stabilisierten Naturlatex, ein Verfahren zu seiner Herstellung und die Verwendung von Carbonsäuresalzen zu seiner Konservierung und Stabilisierung.

Naturlatex, der milchige Saft des Kautschukbaumes *Hevea brasi-liensis* und anderer kautschukliefernder Pflanzen, enthält Polyisopren, das feinst verteilt in der wäßrigen Phase vorliegt und den eigentlichen Naturkautschuk darstellt, sowie als Nebenbestandteile Eiweißstoffe, Zucker, Polysaccharide und anorganische Salze.

Insbesondere diese Nebenbestandteile bilden einen Nährboden für Bakterien, die sich in dem Latex schnell vermehren und diesen verderben lassen, wobei es schließlich zur Koagulation, d.h. zur Ausfällung der Polymerphase kommt.

Da zwischen der Gewinnung auf den Kautschukplantagen und der Weiterverarbeitung häufig weite Transportwege und unter Umständen längere Lagerzeiten liegen, sofern nicht an Ort und Stelle die Verarbeitung zu Festkautschuk erfolgt, wird der Latex im Normalfall sofort nach der Gewinnung mit geeigneten Mitteln zum Schutz gegen Bakterienbefall und zur Stabilisierung der physikalisch-chemischen Eigenschaften versetzt.

Es ist bekannt, zur Konservierung von Naturlatex Ammoniak in hoher Dosierung (*High ammonia latex)* oder Kombinationen von Ammoniak mit Borsäure, Natriumpentachlorphenolat, Zinkdiethyl-dithiocarbamat, (ZDEC) oder Tetramethylthiuramdisulfid (TMTD) und Zinkoxid (*Low ammonia latex)* zu verwenden (Wong Niap Poh; Developments in Natural Rubber Latex: Production, Properties, Stability; ELASTOMERICS, Dezember 1989).

Die oben angegebenen bekannten Methoden zur Latexkonservierung sind nicht unumstritten, da einerseits hohe Ammoniakkonzentra-tionen zu technischen und arbeitshygienischen Problemen führen und andererseits Borsäure, Natriumphenolat, ZDEC und TMTD toxikologisch bedenklich sind und darüber hinaus ZDEC und TMTD unter bestimmten Bedingungen Diethylamin bzw. Dimethylamin abspalten, aus denen dann unter Einwirkung der praktisch allgegenwärtigen Stickoxide oder anderer Nitrosierungsagentien karzinogene Nitros-amine gebildet werden können.

Da aus Naturlatex in großem Umfang Lebensmittelbedarfsgegenstände sowie Artikel für den Medizin- und Hygienesektor hergestellt werden, besteht verständlicherweise Interesse an Konservierungsmit-teln mit geringer Toxizität, insbesondere an solchen, die keine potentiellen Nitrosaminbildner darstellen.

Der Erfindung liegt daher die Aufgabe zugrunde, ein Verfahren zur Konservierung und Stabilisierung von Naturlatex vorzuschlagen, bei dem Substanzen mit vergleichsweise geringer Toxizität eingesetzt werden, die keine nitrosierbaren Amine freisetzen können bzw. deren Folgeprodukte keine Nitrosamine bilden können. Der Naturlatex soll insbesondere durch einen geeigneten Zusatz mit dem Ziel konserviert und stabilisiert werden, den Gehalt des Latex und der daraus hergestellten Artikel an nitrosierbaren Aminen und an karzinogenen Nitrosaminen zu senken, die als deren Folgeprodukte auftreten:

Überraschenderweise hat es sich gezeigt, daß sich Naturlatex in hervorragender Weise durch Zusatz von wasserlöslichen Carbonsäuresalzen der Formel

R-COO⁻M⁺

konservieren und stabilisieren läßt, in der R ein verzweigter Alkyl- oder Alkenylrest mit 4 bis 17 C-Atomen und vorzugsweise 6 oder 7 bis 12 C-Atomen ist und M⁺ ein einwertiges Kation ist.

Beispiele für R sind der 1-Ethylpentyl-, der 1,1-Dimethylheptyl-, der 2,4,4-Trimethylpentyl- oder der Isododecylrest. Beispiele für M⁺ sind K⁺, Na⁺, NH₄⁺ und die von Alkanolaminen abgeleiteten Kationen wie beispielsweise HO-CH₂-CH₂-NH₃⁺.

Die erfindungsgemäßen Carbonsäuresalze sind nicht nur bekanntermaßen weniger toxisch als die bekannten Konservierungsmittel wie beispielsweise Borsäure, Natriumpentachlorphenolat, ZDEC und TMTD, sondern sie stellen aufgrund ihrer chemischen Zusammen-setzung auch keine potentiellen Nitrosaminbildner dar. Darüber hinaus können sie wegen ihrer hohen Wasserlöslichkeit bei den vom Herstellungsverfahren von Latexartikeln umfaßten Waschprozessen weitgehend wieder aus den Artikeln entfernt werden, wodurch das toxikologische Risiko, sofern es überhaupt vorhanden ist, nochmals verringert wird.

Ferner bieten sie aufgrund ihrer Wasserlöslichkeit den anwendungstechnischen Vorteil, daß sie dem Naturlatex direkt oder in Form einer Lösung zugesetzt werden können, während beispielsweise ZDEC und TMTD wie andere wasserunlösliche Chemikalien zunächst durch Naßvermahlung in einer Kugelmühle oder ähnlichem in eine wäßrige Dispersion überführt werden müssen.

Der Gehalt des erfindungsgemäß konservierten und stabilisierten Latex an erfindungsgemäßem wasserlöslichem verzweigtem Carbonsäu-resalz beträgt bezogen auf den eingesetzten Naturlatex 0,001 bis 1,0 Gew.-%, insbesondere 0,005 bis 0,5 Gew.-% und vorzugsweise 0,01 bis 0,1 Gew.-%.

Ferner kann der erfindungsgemäße Latex bezogen auf den eingesetzten Naturlatex zusätzlich 0,05 bis 1,0 Gew.-% und vorzugsweise 0,1 bis 0,5 Gew.-% einer oder mehrerer wasserlöslicher Basen enthalten. Die wasserlöslichen Basen können Ammoniak, Kaliumhydroxid und/oder Natriumhydroxid umfassen. Alternativ können diese Basen auch ausgewählt sein aus der Gruppe der Alkanolamine wie beispielsweise 2-Aminoethanol und 2-Amino-2-methyl-propanol.

Der erfindungsgemäße Naturlatex kann zusätzlich auch eines oder mehrere der oben genannten bekannten Konservierungsmittel wie beispielsweise Ammoniak und Zinkoxid enthalten. Beispielsweise kann er bezogen auf den eingesetzten Naturlatex 0,05 bis 1,00 Gew.-% und vorzugsweise 0,10 bis 0,50 Gew.-% Ammoniak enthalten. Er kann bezogen auf den eingesetzten Naturlatex beispielsweise 0,01 bis 1,0 Gew.-% und vorzugsweise 0,02 bis 0,2 Gew.-% Zinkoxid enthalten. Ammoniak und Zinkoxid können auch gemeinsam vorhanden sein.

Durch den bakteriellen bzw. enzymatischen Abbau von Latexbestandteilen werden kurzkettige Fettsäuren gebildet, die den pH-Wert des Latex absinken lassen. Der Gehalt eines Latex an kurzkettigen Fettsäuren und somit sein Zersetzungsgrad wird durch die VFA-Zahl (volatile fatty acids, flüchtige Fettsäuren) nach DIN ISO 506 charakterisiert, die man erhält, wenn man die kurzkettigen, flüchtigen Fettsäuren aus dem mit Schwefelsäure angesäuerten Latex-Serum abdestilliert und anschließend titrimetrisch bestimmt. Die VFA-Zahl entspricht dabei der Menge Kaliumhydroxid in Gramm, die man zur Neutralisierung der abdestillierten Fettsäuren aus einer 100 g Trockensubstanz entsprechenden Latexmenge benötigt. Die VFA-Zahl sollte daher so niedrig wie möglich sein.

Auch die KOH-Zahl nach ISO 127, die der Menge Kaliumhydroxid in Gramm entspricht, die den in einer 100 g Trockensubstanz entsprechenden Latexmenge als Ammoniumsalze vorliegenden Säuren äquivalent ist, gibt Aufschluß über die Konzentration der durch bakterielle Zersetzung gebildeten Säuren. Die KOH-Zahl sollte daher wiederum so niedrig wie möglich sein.

Eine für die Verarbeitung des Latex wichtige Kenngröße ist die mechanische Stabilität (MST), die eine Aussage über die Beständigkeit eines Latex gegen Scherbeanspruchung macht. Bei der MST-Prüfung nach DIN 53 567 wird der Latex unter genau festgelegten Bedingungen mit einem hochtourigen Scheibenrührer gerührt, bis er koaguliert. Der MST-Wert ist die bis zum Auftreten der ersten Agglomerate von koaguliertem Kautschuk verstrichene Zeit in Sekunden.

Üblicherweise setzt man dem Latex zusätzlich zum Konservierungssystem noch Salze, z.B. die Kalium- oder Ammoniumsalze, von geradkettigen Fettsäuren der Kettenlänge C₈ bis C₁₈, wie beispielsweise Kaliumcaprylat, Ammoniumlaurat oder Kaliumoleat als Stabilisatoren zu, die den MST-Wert auf das für die gewünschte Anwendung jeweils erforderliche Niveau anheben (D.C. Blackley et al.; Effect of potassium fatty-acid soaps upon mechanical and chemical stability of natural rubber latex; PLASTICS AND RUBBER: MATERIALS AND APPLICATION; Mai 1979). Im Gegensatz zu den erfindungsgemäßen Carbonsäuresalzen mit verzweigter Kohlenstoffkette wirken diese Salze jedoch bekanntermaßen nicht konservierend auf den Latex. Solche geradkettigen Salze können in dem erfindungsgemäßen Latex zusätzlich vorhanden sein, wobei ihre Menge maximal 0,5 Gew.-% beträgt.

Ein weiterer überraschender Vorzug der erfindungsgemäßen Carbonsäuresalze mit verzweigter Kohlenstoffkette besteht darin, daß sie im gleichen Sinne wie die oben angegebenen Salze geradkettiger Fettsäuren stabilisierend auf den Latex wirken und diese daher ganz oder teilweise zu ersetzen vermögen.

### Beispiel 1

50 kg Feldlatex (*Hevea brasiliensis*) wurden unter Rühren mit 1000 g Ammoniaklösung (8 Gew.-%), 25 g einer wäßrigen Zinkoxiddispersion (50 Gew.-%) sowie 25 g einer wäßrigen TMTD-Dispersion (50 Gew.-%) versetzt. (Vergleich)

### Beispiel 2

50 kg Feldlatex (*Hevea brasiliensis*) wurden unter Rühren mit 1000 g Ammoniaklösung (8 Gew.-%), 25 g einer wäßrigen Zinkoxiddispersion (50 Gew.-%) sowie 12 g einer wäßrigen Lösung von Kaliumneodecanoat (Kaliumsalz der 1,1-Dimethylheptylcarbonsäure.) (50 Gew.-.%) versetzt.

### Beispiel 3

50 kg Feldlatex (*Hevea brasiliensis*) wurden unter Rühren mit 1000 g Ammoniaklösung (8 Gew.-%), 25 g einer wäßrigen Zinkoxiddispersion (50 Gew.-%) sowie 15 g einer wäßrigen Lösung von Kalium-2-ethylhexanoat (50 Gew.-%) versetzt.

### Beispiel 4

50 kg Feldlatex *(Hevea brasiliensis*) wurden unter Rühren mit 1000 g Ammoniaklösung (8 Gew.-%), 25 g einer wäßrigen Zinkoxiddispersion (50 Gew.-%), 25 g einer wäßrigen TMTD-Dispersion (50 Gew.-%) sowie 1000 g einer wäßrigen Lösung von Ammoniumlaurat (20 Gew.-%) versetzt. Anschließend wurde der Feststoffgehalt des Latex durch Zentrifugieren auf 60 Gew.-% erhöht. (Vergleich)

### Beispiel 5

50 kg Feldlatex (*Hevea brasiliensis*) wurden unter Rühren mit 1000 g Ammoniaklösung (8 Gew.-%), 25 g einer wäßrigen Zinkoxiddispersion (50 Gew.-%) sowie 12 g einer wäßrigen Lösung von Kaliumneodecanoat (50 Gew.-%) versetzt. Anschließend wurde der Feststoffgehalt des Latex durch Zentrifugieren auf 60 Gew.-% erhöht.

### Beispiel 6

50 kg Feldlatex (*Hevea brasiliensis*) wurden unter Rühren mit 50 g einer wäßrigen Zinkoxiddispersion (50 Gew.-%) sowie 40 g einer wäßrigen von Lösung Kaliumneodecanoat (50 Gew.-%) versetzt. Durch Zugabe von Kaliumhydroxidlösung (20 Gew.-%) wurde die Mischung auf einen pH-Wert von 10 eingestellt. Anschließend wurde der Feststoffgehalt des Latex durch Zentrifugieren auf 60 Gew.-% erhöht.

Die verwendeten Dispersionen von Zinkoxid und TMTD waren zuvor in bekannter Weise durch Naßvermahlung in einer Kugelmühle hergestellt worden.

Alle Versuchsansätze wurden unter gleichen Bedingungen (langsames Rühren bei Raumtemperatur) hergestellt und gelagert, wobei in gewissen Abständen kleine Proben zur Bestimmung der chemischphysikalischen Daten entnommen wurden.

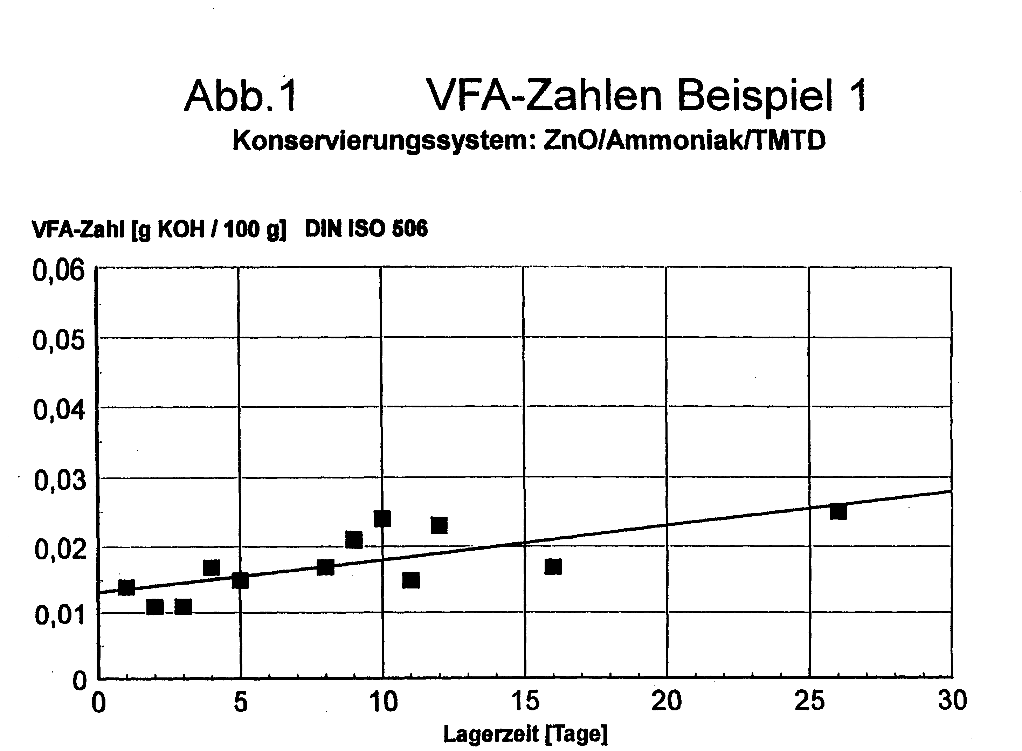

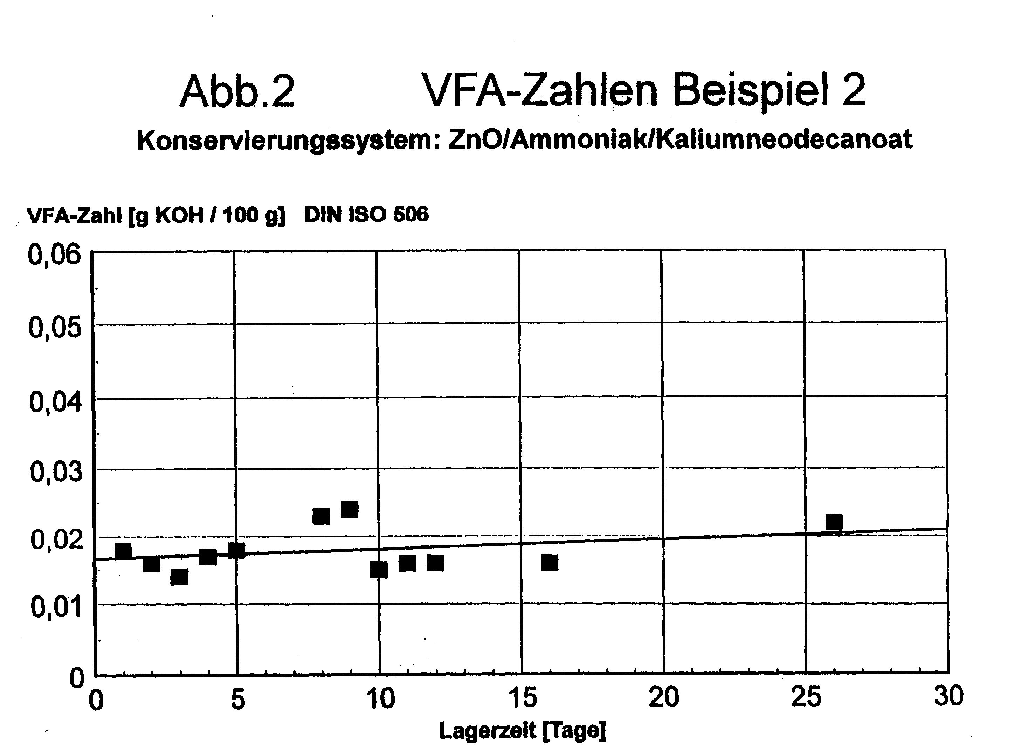

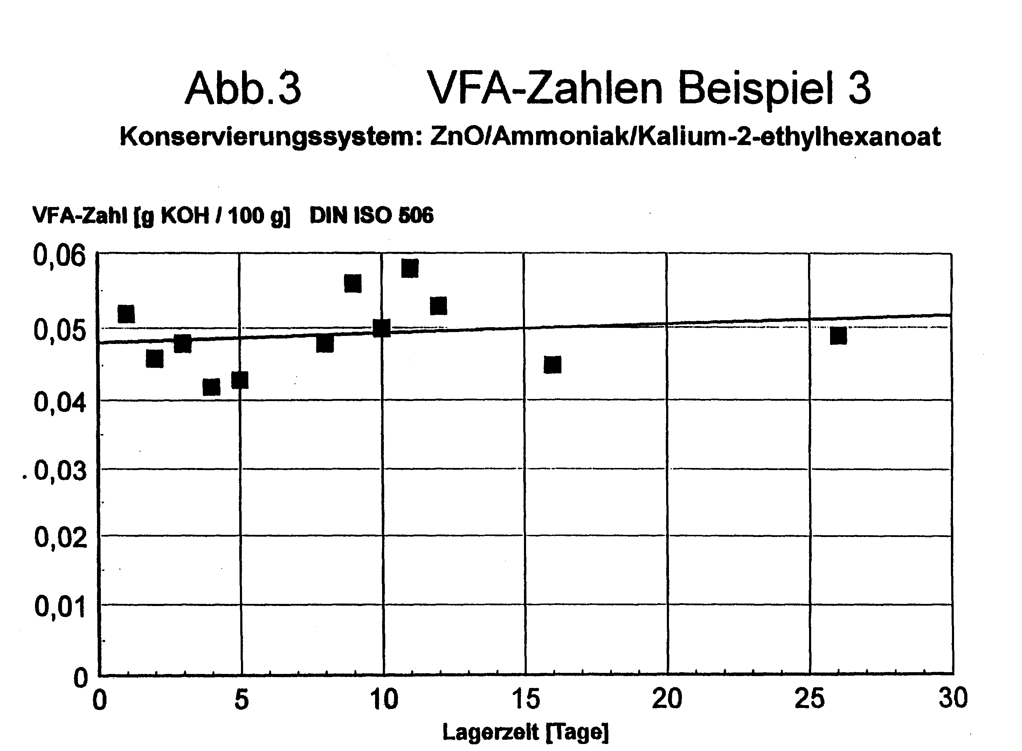

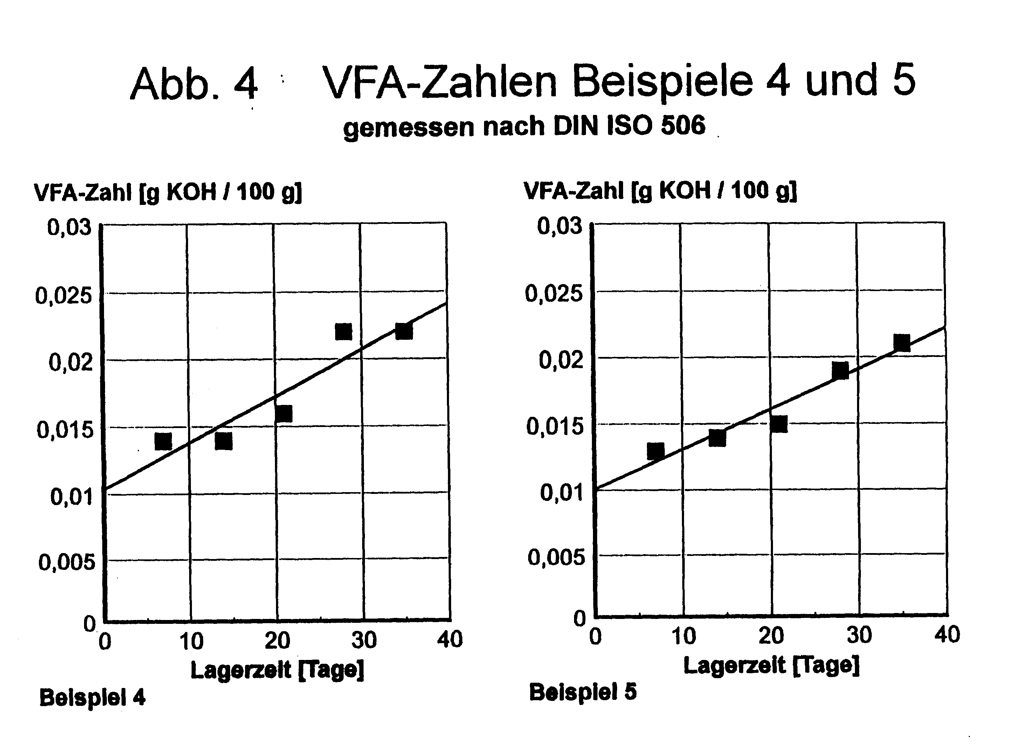

Die VFA-Zahlen der Ansätze der Beispiel 1 bis 6 als Funktion der Lagerzeit sind den Abbildungen 1, 2, 3, 4 und 7 zu entnehmen. Die zeitliche Änderung der VFA-Zahlen (Steigung der Regressionsgeraden) und somit die konservierende Wirkung der erfindungsgemäßen Zusätze ist im Rahmen der Meßwertstreuung vergleichbar mit den Werten, die bei Einsatz der bekannten Kombination TMTD/Zinkoxid gefunden werden. Die Tatsache, daß die VFA-Zahlen bei Beispiel 3 insgesamt auf einem höheren, aber noch akzeptablen Niveau liegen, ist methodisch bedingt und durch die Wasserdampfflüchtigkeit der 2-Ethylhexansäure zu erklären, die dazu führt, daß systematisch höhere Werte gemessen werden.

Im Vergleich zu konserviertem Latex steigt die VFA-Zahl von nicht-konserviertem Naturlatex bekanntermaßen infolge Bakterienbefall sehr schnell an, und es kommt normalerweise innerhalb von ca. 1 bis 2 Tagen zur Koagulation des Latex.

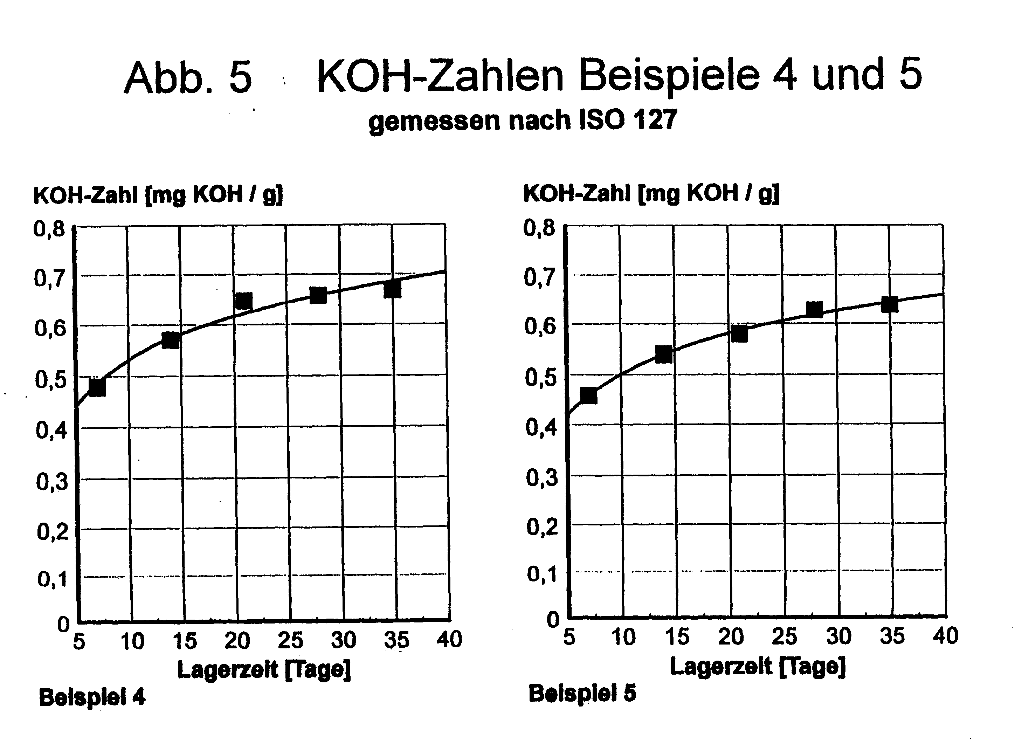

Bei den Beispielen 4 und 5 wurde zusätzlich die KOH-Zahl nach ISO 127 als Funktion der Lagerzeit bestimmt (Abbildung 5). Ein signifikanter Unterschied zwischen dem erfindunsgemäßen Konservierungsverfahren und dem bekannten Verfahren ist nicht festzustellen.

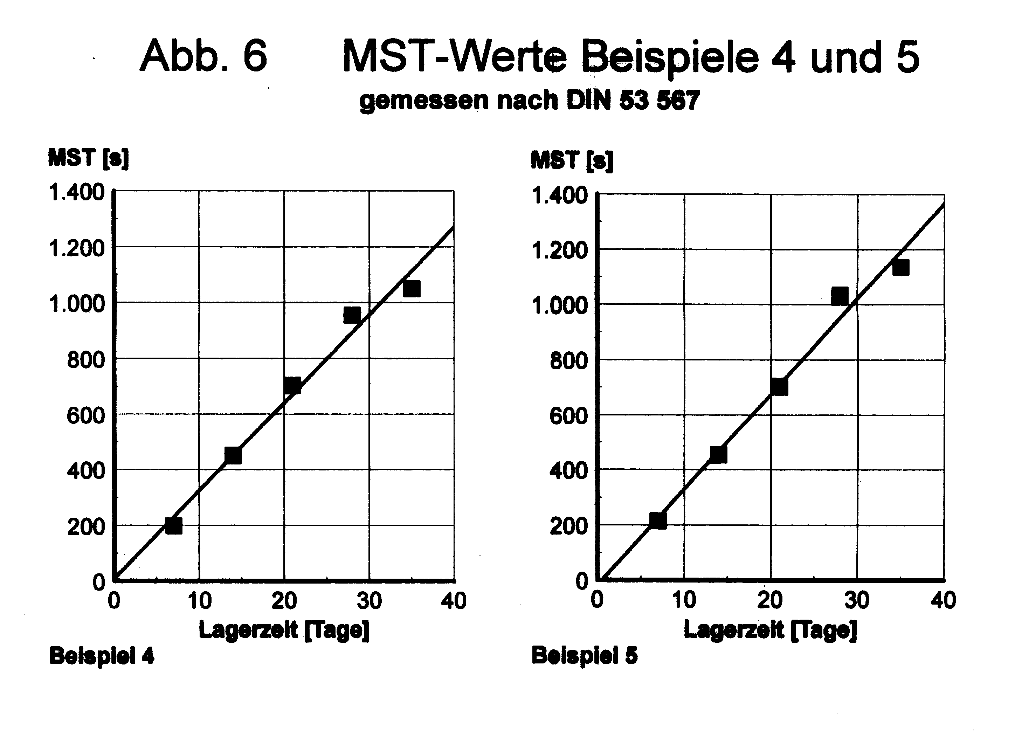

Abbildung 6 zeigt die bei den Versuchsansätzen der Beispiele 4 und 5 gemessenen MST-Werte nach DIN 53 567 als Funktion der Lagerzeit. Auch hier sind Wertniveau und zeitlicher Anstieg vergleichbar.

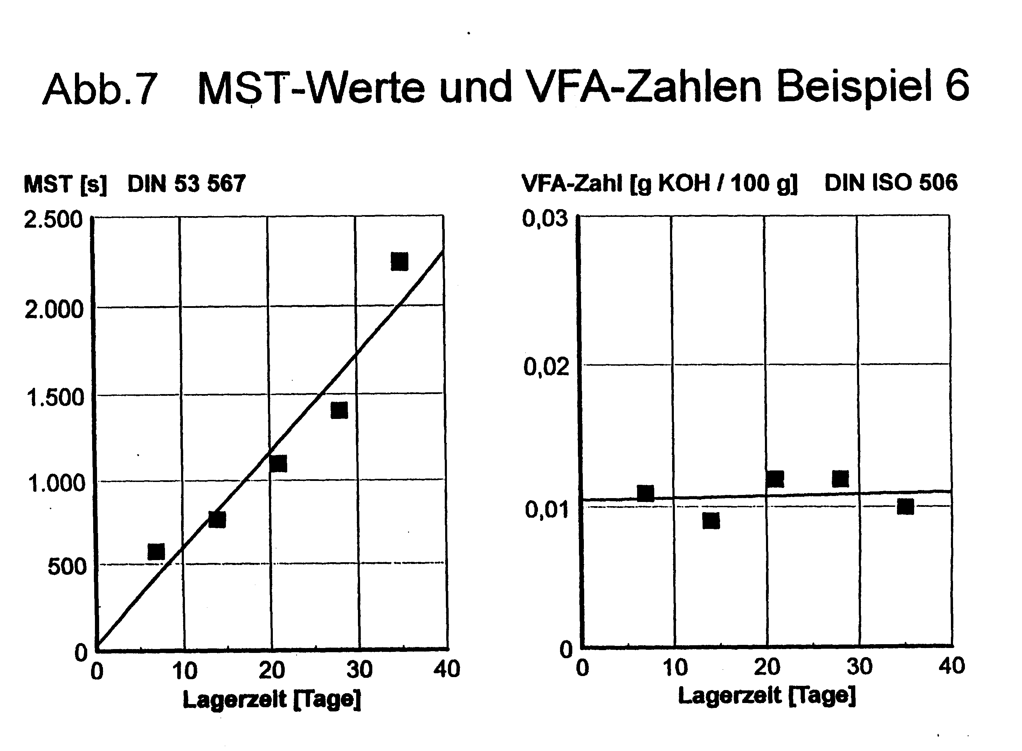

Bei dem ammoniakfreien Versuchsansatz von Beispiel 6 wurden der MST-Wert und die VFA-Zahl in Abhängigkeit von der Lagerzeit bestimmt (Abbildung 7). Die gemessenen VFA-Zahlen sind den übrigen Versuchsansätzen vergleichbar, die MST-Werte liegen etwas höher.

## Patentansprüche

1. Naturlatex, dadurch gekennzeichnet, daß er mindestens ein wasserlösliches Carbonsäuresalz der Formel R-COO⁻M⁺ enthält, in der R ein verzweigter Alkyl- oder Alkenylrest mit 4 bis 17 Kohlenstoffatomen ist und M⁺ ein einwertiges Kation ist.

2. Naturlatex nach Anspruch 1, dadurch gekennzeichnet, daß R vorzugsweise 6 oder 7 bis 12 Kohlenstoffatome enthält.

3. Naturlatex nach Anspruch 1 oder 2, dadurch gekennzeichnet, daß M⁺ Na⁺, K⁺, NH₄⁺ und/oder Kationen umfaßt, die von Alkanolaminen abgeleitet sind.

4. Naturlatex nach, einem der Ansprüche 1 bis 3, dadurch gekennzeichnet, daß er bezogen auf den eingesetzten Naturlatex 0,001 bis 1,0 Gew.-%, insbesondere 0,005 bis 0,5 Gew.-% und vorzugsweise 0,01 bis 0,1 Gew.-% wasserlösliches Carbonsäuresalz enthält.

5. Naturlatex nach einem der Ansprüche 1 bis 4, dadurch gekennzeichnet, daß er bezogen auf den eingesetzten Naturlatex zusätzlich 0,05 bis 1,0 Gew.-% und vorzugsweise 0,1 bis 0,5 Gew.-% einer oder mehrerer wasserlöslicher Basen enthält.

6. Naturlatex nach Anspruch 5, dadurch gekennzeichnet, daß die wasserlöslichen Basen Ammoniak, Kaliumhydroxid, Natriumhydroxid und/oder Basen ausgewählt aus der Gruppe der Alkanolamine umfaßt.

7. Naturlatex nach einem der vorhergehenden Ansprüche, dadurch gekennzeichnet, daß er bezogen auf den eingesetzten Naturlatex zusätzlich 0,01 bis 1,0 Gew.-% und vorzugsweise 0,02 bis 0,2 Gew.-% Zinkoxid enthält.

8. Verfahren zur Herstellung eines konservierten und stabilisierten Naturlatex, dadurch gekennzeichnet, daß dem Naturlatex mindestens ein wasserlösliches Carbonsäuresalz der Formel R-COO⁻M⁺ zugestzt wird, in der R ein verzweigter Alkyl- oder Alkenylrest mit 4 bis 17 Kohlenstoffatomen ist und M⁺ ein einwertiges Kation ist.

9. Verfahren nach Anspruch 8, dadurch gekennzeichnet, daß R vorzugsweise 6 oder 7 bis 12 Kohlenstoffatome enthält.

10. Verfahren nach Anspruch 8 oder 9, dadurch gekennzeichnet, daß M⁺ Na⁺ K⁺, NH₄⁺ oder Kationen umfaßt, die von Alkanolaminen abgeleitet sind.

11. Verfahren nach einem der Ansprüche 8 bis 10, dadurch gekennzeichnet, daß bezogen auf den eingesetsten Naturlatex 0,001 bis 1,0 Gew.-%, insbesondere 0,005 bis 0,5 Gew.-% und vorzugsweise 0,01 bis 0,1 Gew.-% wasserlösliches Carbonsäuresalz zugesetzt werden.

12. Verfahren nach einem der Ansprüche 8 bis 11, dadurch gekennzeichnet, daß bezogen auf den eingesetzen Naturlatex zusätzlich 0,05 bis 1,0 Gew.-% und vorzugsweise 0,1 bis 0,5 Gew.-% einer oder mehrerer wasserlöslicher Basen zugesetzt werden.

13. Verfahren nach Anspruch 12, dadurch gekennzeichnet, daß die wasserlöslichen Basen Ammoniak, Kaliumhydroxid, Natriumhydroxid und/oder Basen ausgewählt aus der Gruppe der Alkanolamine umfaßt.

14. Verfahren nach einem der Ansprüche 8 bis 13, dadurch gekennzeichnet, daß bezogen auf den eingesetzten Naturlatex ferner jeweils unabhängig 0,05 bis 1,00 Gew.-% und vorzugsweise 0,10 bis 0,50 Gew.-% Ammoniak und/oder 0,01 bis 1,0 Gew.-% und vorzugsweise 0,02 bis 0,2 Gew.-% Zinkoxid zugesetzt werden.

15. Verwendung eines wasserlöslichen Carbonsäuresalzes der Formel R-COO⁻M⁺, in der R ein verzweigter Alkyl- oder Alkenylrest mit 4 bis 17 Kohlenstoffatomen ist und M⁺ ein einwertiges Kation ist, zur Konservierung und/oder Stabilisierung von Naturlatex.

16. Verwendung nach Anspruch 15, dadurch gekennzeichnet, daß R vorzugsweise 6 oder 7 bis 12 Kohlenstoffatome enthält.

17. Verwendung nach Anspruch 15 oder 16, dadurch gekennzeichnet, daß M⁺ Na⁺, k⁺, NH₄⁺ und/oder Kationen umfaßt, die von Alkanolaminen abgeleitet sind.

18. Verwendung nach einem der Ansprüche 15 bis 17, dadurch gekennzeichnet, daß bezogen auf den eingesetzten Naturlatex 0,001 bis 1,0 Gew.-%, insbesondere 0,005 bis 0,5 Gew.-% und vorzugsweise 0,01 bis 0,1 Gew.-% wasserlösliches Carbonsäuresalz eingesetzt werden.

19. Verwendung nach einem der Ansprüche 15 bis 18, dadurch gekennzeichnet, daß bezogen auf den eingesetzen Naturlatex zusätzlich 0,05 bis 1,0 Gew.-% und vorzugsweise 0,1 bis 0,5 Gew.-% einer oder mehrerer wasserlöslicher Basen eingesetzt werden.

20. Verwendung nach Anspruch 19, dadurch gekennzeichnet, daß die wasserlöslichen Basen Ammoniak, Kaliumhydroxid, Natriumhydroxid und/oder Basen ausgewählt aus der Gruppe der Alkanolamine umfassen.

21. Verwendung nach einem der Ansprüche 15 bis 20, dadurch gekennzeichnet, daß bezogen auf den eingesetzten Naturlatex zusätzlich 0,01 bis 1,0 Gew.-%, vorzugsweise 0,02 bis 0,2 Gew.-% Zinkoxid eingesetzt werden.
